# EUROPÄISCHE PATENTSCHRIFT

(11) **EP 3 870 485 B1**
(45) Veröffentlichungstag und Bekanntmachung des Hinweises auf die Patenterteilung: **04.05.2022**
(21) Anmeldenummer: 19782560.7
(22) Anmeldetag: 01.10.2019
(51) Int. Cl.: B60T 15/20

(54) **ELEKTROPNEUMATISCHE BREMSSYSTEMARCHITEKTUR OHNE DIREKTE PNEUMATISCHE BETRIEBSBREMSREDUNDANZ AN DER HINTERACHSE**
ELECTROPNEUMATIC BRAKING SYSTEM ARCHITECTURE WITHOUT DIRECT PNEUMATIC SERVICE BRAKE REDUNDANCY AT THE REAR AXLE (1P1E)
ARCHITECTURE DE SYSTÈME DE FREINAGE ÉLECTROPNEUMATIQUE SANS REDONDANCE DE FREINAGE DE FONCTIONNEMENT PNEUMATIQUE DIRECTE SUR L'ESSIEU ARRIÈRE (1P1E)

(30) Priorität: 23.10.2018 DE 102018126312
(43) Veröffentlichungstag der Anmeldung: 01.09.2021
(73) Patentinhaber: ZF CV Systems Europe BV, 1170 Brussels (BE)
(72) Erfinder: VAN THIEL, Julian, 30161 Hannover (DE)
(74) Vertreter: Rabe, Dirk-Heinrich
(86) Internationale Anmeldenummer: PCT/EP2019/076518
(87) Internationale Veröffentlichungsnummer: WO 2020/083619

(56) Entgegenhaltungen:
- EP-A2- 0 510 326
- WO-A1-2018/172394
- GB-A- 2 080 899

## Beschreibung

Die Erfindung betrifft ein Redundanzmodul für ein pneumatisches Bremssystem eines Fahrzeugs, insbesondere Nutzfahrzeugs, mit Federspeicherbremsen an wenigstens einer Achse, sowie ein pneumatisches Bremssystem und ein Fahrzeug.

In elektropneumatischen Bremssystemen werden Achsmodulatoren dazu eingesetzt, fortgeschrittene Bremsfunktionen und Fähigkeiten umzusetzen. Üblicherweise wird hierbei eine Druckmodulation dadurch realisiert, dass eine Steuerdruckeinheit einen Steuerdruck bereitstellt, welcher dann von einem Relaisventil volumenverstärkt an Bremsaktuatoren bereitgestellt wird. Es gibt auch Systeme, die direkt steuerbare 2/2-Wege-Ventile aufweisen und direkt einen Volumendruck an den Bremsaktuatoren aussteuern.

Um eine Redundanz für den Fall zu erzeugen, dass ein Fehler in dem Bremssystem vorliegt, nutzen derartige Systeme in der Regel eine zweikanalige Aussteuerung eines pneumatischen Drucks mittels eines Bremswertgebers. Über einen ersten Kanal wird der Betriebsbremswunsch bereitgestellt, der im üblichen Betrieb umgesetzt wird. Über einen zweiten Kanal am Bremswertgeber wird dann ein redundanter Druck ausgegeben, der ebenfalls den Bremswunsch darstellt, aber im Fehlerfall von dem Bremssystem umgesetzt wird.

Ein solches System ist beispielsweise aus EP 1 953 054 A1 bekannt. Dort ist eine Bremsanlage für ein Nutzfahrzeug offenbart, welche wenigstens eine elektronische Steuereinheit, mindestens einen ersten und einen zweiten Druckluftkreis, die voneinander getrennt sind, mindestens einen Feststellbremszylinder, mindestens eine von der elektronischen Steuereinheit ansteuerbare Feststellbremsventileinrichtung, über die eine Druckkammer des Feststellbremszylinders be- bzw. entlüftbar ist und wenigstens einen Betriebsbremszylinder aufweist, dem zum Zwecke einer Bremsung bei fehlerfreiem Betrieb der Bremsanlage Druckluft aus dem ersten Druckluftkreis zuführbar ist. Ferner ist ein Umschaltventil vorgesehen, das von der elektronischen Steuereinheit ansteuerbar ist, über das im Falle eines fehlerbedingten Druckverlustes in dem ersten Druckluftkreis dem mindestens einen Betriebsbremszylinder zum Zwecke einer Notbremsung Druckluft aus dem zweiten Druckluftkreis zuführbar ist, wobei die Feststellbremsventileinrichtung so ausgelegt ist, dass der den mindestens einen Feststellbremszylinder belüftende Schaltzustand der Feststellbremsventileinrichtung während der Notbremsung beibehaltbar ist. In diesem System wird also der Betriebsbremszylinder für den Redundanzfall (Notbremsung) genutzt, während der Feststellbremszylinder gelöst bleibt. Hierfür ist es erforderlich, dass das Umschaltventil den entsprechenden Pfad freigibt und eine Volumenverstärkung eines Steuerdrucks stattfindet. Ein weiteres Relaisventil ist hierbei also in der Regel erforderlich. Ferner lässt sich ein solches System nicht unmittelbar mit einer einkanaligen Aussteuerung eines Bremswertgebers umsetzen.

Ein weiteres System ist aus EP 2 137 036 A1 bekannt. Dort ist ein Verfahren zum Steuern einer elektronischen Bremsanlage eines Nutzfahrzeugs offenbart. Das Verfahren umfasst die Schritte: Erfassen eines Defektes durch eine erste elektronische Steuereinheit, die im Wesentlichen einem Betriebsbremssystem des Nutzfahrzeugs zugeordnet ist und/oder durch eine zweite elektronische Steuereinheit, die im Wesentlichen einem Feststellbremssystem des Nutzfahrzeugs zugeordnet ist, wobei der Defekt zu einem mindestens teilweisen Ausfall der Betriebsbremswirkung an einer Achse des Nutzfahrzeugs führt. Ein Bremswunsch wird durch eine zentrale elektronische Steuereinheit auf der Grundlage der Betätigung eines Bremswertgebers erfasst. Ein den Bremswunsch anzeigendes elektrisches Signal wird durch die zweite elektronische Steuereinheit empfangen. Eine Feststellbremsventileinrichtung wird durch die zweite elektronische Steuereinheit angesteuert und die durch den Bremswunsch veranlasste Bremsung wird durch einen Federspeicherbremszylinder des Feststellbremssystems unterstützt. Das Verfahren zeichnet sich dadurch aus, dass die erste elektronische Steuereinheit und die zweite elektronische Steuereinheit einander funktionell unterstützen, sodass Ausfälle der einen elektronischen Steuereinheit durch die andere elektronische Steuereinheit ausgeglichen werden können. Dem Verfahren liegt also die Idee einer elektronischen Redundanz zugrunde, bei dem zwei Steuereinheiten vorgesehen sind, die gegenseitig Funktionen übernehmen können. Ein Nachteil hierbei ist, dass zwei elektronische Steuereinheiten vorgesehen werden müssen, wodurch die Kosten des Bremssystems erhöht werden können. Es besteht Bedarf daran, ein preiswertes Bremssystem bereitzustellen, bei dem vorzugsweise möglichst wenige elektronische Steuereinheiten verwendet werden.

Weiterhin ist aus EP 2 576 297 A1 ein Verfahren zur Steuerung einer druckmittelbetätigten und wenigstens teilweise elektronischen Bremsanlage eines Fahrzeugs bekannt. Dabei wird wenigstens eine Achse druckgesteuert und die andere Achse elektronisch geregelt. Steuer- und Backup-Drücke für die Radbremsen an der wenigstens einen elektronisch ausgesteuerten Achse werden erzeugt, wobei aus diesen bei einem Ausfall der elektronischen Bremsdruckregelung die elektronisch geregelte Achse für diese Achse druckmittelgesteuert erzeugt werden. Das Verfahren zeichnet sich im Konkreten dadurch aus, dass die Bremsdrücke für die Radbremsen an der druckmittelgesteuerten Achse oder die Bremswirkung an den Rädern dieser Achse repräsentierende elektrische Signale erzeugt werden, und wenigstens abhängig von den die Bremsdrücke für die Radbremsen an der druckmittelgesteuerten Achse oder von den die Bremswirkung an den Rädern der druckgesteuerten Achse repräsentierenden elektrischen Signalen die Bremsdrücke für Radbremsen eines Anhängers des Fahrzeugs erzeugt werden. Hierbei ist vorgesehen, dass für den Fall, dass keine der Bremsdrücke für die Radbremsen an der druckmittelgesteuerten Achse oder die Bremswirkung an den Rädern der druckgesteuerten Achse repräsentierenden elektrischen Signale gebildet werden können, die Bremsdrücke für die Radbremsen des Anhängers abhängig von den Steuer- oder Backup-Drücken für die Radbremsen der elektrisch gesteuerten Achse elektropneumatisch erzeugt werden. Das heißt, der Anhängerdruck wird basierend auf Drücken von entweder der pneumatisch gesteuerten Achse, wie beispielsweise der Vorderachse, oder der elektrisch gesteuerten Achse, wie beispielsweise der Hinterachse, gesteuert. Eine Redundanz zwischen der Vorder- und Hinterachse ist hier allerdings nicht vorgesehen.

Die WO 2018/172394 A1 offenbart ein elektropneumatisches Steuermodul für einen Fahrzeugzug, mit einem Vorratseingang, einer einen Anhängerbremsdruckanschluss umfassenden Anhängersteuereinheit, einer einen Federspeicher-Anschluss umfassenden Feststellbremseinheit, und einer elektronischen Steuereinheit. Das Steuermodul umfasst eine Parkbremsventileinheit mit einem pneumatisch gesteuerten Schaltventil, welches bei Verbinden des Federspeicher-Anschlusses mit einer Drucksenke so geschaltet wird, dass ein Bremsdruck an dem Anhängerbremsdruckanschluss aussteuerbar ist.

Aufgabe der vorliegenden Erfindung ist es, eine redundante Bremsung für ein Bremssystem zu realisieren, bei dem nur ein einziger pneumatischer Anschluss an den Bremswertgeber vorgesehen ist. Bei einem solchen Bremssystem ist vorzugsweise vorgesehen, dass Bremsdrücke an einer ersten Achse rein pneumatisch ausgesteuert werden und Bremsdrücke an einer zweiten Achse elektropneumatisch ausgesteuert werden. Es soll vorzugsweise eine Redundanz an der zweiten Achse, an der die Bremsdrücke elektropneumatisch ausgesteuert werden, pneumatisch realisiert werden.

In einem ersten Aspekt löst die Erfindung die Aufgabe bei einem Redundanzmodul der eingangs genannten Art mit den Merkmalen des Anspruchs 1. Ein solches Redundanzmodul weist einen Parkbremsdruckanschluss zum Empfangen eines Parkbremsdrucks, einen Federspeicheranschluss zum Bereitstellen eines Federspeicherdrucks und einen Redundanzdruckanschluss zum Empfangen eines Redundanzdrucks auf. Das Redundanzmodul weist ferner eine Kolbenanordnung, mit einem Inverskolben auf, der eine Parkbremsdrucksteuerfläche, eine Federspeichersteuerfläche und eine Redundanzdrucksteuerfläche aufweist, wobei ein auf die Parkbremsdrucksteuerfläche wirkender Parkbremsdruck das Aussteuern eines gleichsinnigen Federspeicherdrucks, und ein auf die Redundanzdrucksteuerfläche wirkender Redundanzdruck ein inverses Aussteuern des Federspeicherdrucks bewirkt. Der Parkbremsdruckanschluss ist vorzugsweise mit einem Parkbremsmodul, wie beispielsweise einer elektropneumatischen Parkbremse, verbunden und empfängt von diesem den Parkbremsdruck. Der Federspeicheranschluss ist in entsprechender Weise vorzugsweise mit Federspeicherbremsen der redundant zu bremsenden Achse verbunden. Federspeicherbremsen sind so aufgebaut, dass diese belüftet gelöst sind und entlüftet zugespannt sind. Das heißt, bei Anliegen des Parkbremsdrucks werden die Federspeicherbremsen gelöst, während die Federspeicherbremsen bei Anliegen eines Umgebungsdrucks zugespannt sind.

Der Inverskolben, der erfindungsgemäß in der Kolbenanordnung des Redundanzmoduls vorgesehen ist, weist drei Steuerflächen auf, wobei diese so ausgebildet sind, dass bei Anliegen eines Drucks an der Parkbremsdrucksteuerfläche ein gleichsinniger Federspeicherdruck ausgesteuert wird und bei Anliegen eines Drucks an der Redundanzdrucksteuerfläche ein invers wirkender Federspeicherdruck ausgesteuert wird. Der dem Redundanzmodul zugeführte Redundanzdruck wird also invers ausgesteuert, und zwar an dem Federspeicheranschluss, um so die Federspeicherbremsen der entsprechenden Achse invers anzusteuern, um diese zur redundanten Bremsung oder Notbremsung zu verwenden.

Auf diese Weise ist ein rein pneumatisches redundantes Bremsen der mit Federspeicherbremsen versehenen Achse möglich, ohne dass eine elektrische Redundanz, beispielsweise über ein Parkbremsmodul, umgesetzt werden muss. Als Redundanzdruck kann dabei ein einen Bremswunsch angebender Steuerdruck, wie beispielsweise ein Druck eines einkanaligen Bremswertgebers oder ein Bremsdruck einer weiteren Achse, verwendet werden. Ein Eingriff in den bestehenden Betriebsbremszylinder ist nicht erforderlich. Auch ist es nicht erforderlich, einen weiteren Kanal für die Betriebsbremsen vorzusehen, vielmehr wird der eine Kanal der Federspeicherbremsen zum redundanten Bremsen verwendet.

In einer ersten bevorzugten Ausführungsform liegt der Inverskolben an einem Belüftungsventilsitz an, wobei Fluid über den Belüftungsventilsitz strömt, wenn der auf die Parkbremsdrucksteuerfläche wirkende Parkbremsdruck den auf die Federspeichersteuerfläche wirkenden Federspeicherdruck übersteigt. Im Ruhezustand, das heißt im drucklosen Zustand, bei Druckgleichgewicht und/oder bei einem Federspeicherdruck, der den Parkbremsdruck übersteigt, liegt der Inverskolben vorzugsweise an dem Belüftungsventilsitz an.

Vorzugsweise weist die Kolbenanordnung ferner einen Entlüftungskolben auf, der an einem Entlüftungsventilsitz anliegt und einen Entlüftungsanschluss wahlweise absperrt oder freigibt. Dieser Entlüftungskolben ist vorzugsweise federbelastet vorgespannt gegen den Entlüftungsventilsitz, sodass im drucklosen Zustand der Entlüftungskolben an dem Entlüftungsventilsitz anliegt und den Entlüftungsanschluss absperrt. Erst wenn beispielsweise der Federspeicherdruck den Parkbremsdruck übersteigt, hebt sich der Entlüftungskolben von dem Entlüftungsventilsitz ab und gibt den Entlüftungsanschluss frei.

In einer bevorzugten Weiterbildung ist vorgesehen, dass der Belüftungsventilsitz an dem Entlüftungskolben ausgebildet ist. Auf diese Weise kann sich der Belüftungsventilsitz gemeinsam mit dem Entlüftungskolben bewegen, um eine gleichzeitige Be- und Entlüftung zu verhindern.

In einer bevorzugten Weiterbildung ist vorgesehen, dass Redundanzdruck auf die Redundanzsteuerfläche aufbringbar ist, um ein Überströmen von Fluid von dem Federspeicheranschluss über den Entlüftungsventilsitz zu bewirken. Auf diese Weise kann eine inverse Aussteuerung des Redundanzdrucks erreicht werden. Steigt der Redundanzdruck an, kann Fluid von dem Federspeicheranschluss über den Entlüftungsventilsitz strömen, sodass der Federspeicheranschluss in der Folge entlüftet wird. Dies geschieht vorzugsweise proportional zu dem Wert des Redundanzdrucks.

Vorzugsweise ist der Redundanzdruck auf die Redundanzsteuerfläche aufbringbar, um den Inverskolben gemeinsam mit dem Entlüftungskolben zu bewegen und den Entlüftungskolben von dem Entlüftungsventilsitz abzuheben. Der Inverskolben bewegt sich also basierend auf dem Redundanzdruck und drückt hierbei vorzugsweise den Entlüftungskolben derart, dass sich dieser vom Entlüftungsventilsitz löst, sodass in der Folge Fluid von dem Federspeicheranschluss über den Entlüftungsventilsitz zum Entlüftungsanschluss strömen kann.

In einer bevorzugten Weiterbildung ist der Entlüftungsventilsitz radial außerhalb des Belüftungsventilsitzes angeordnet. Vorzugsweise sind beide Ventilsitze, der Entlüftungsventilsitz und der Belüftungsventilsitz, im Wesentlichen ringförmig. Auf diese Weise kann eine kompakte Bauform erreicht und eine zweckmäßige Anordnung der verschiedenen Anschlüsse kann erzielt werden.

In einer weiter bevorzugten Ausgestaltung weist das Redundanzmodul ein elektropneumatisches Redundanzventil auf, mit einem ersten Redundanzventilanschluss, der den Redundanzdruckanschluss bildet oder mit diesem verbunden ist, einem zweiten Redundanzventilanschluss, der mit einer Redundanzdruckkammer verbunden ist und mit einem dritten Redundanzventilanschluss, der mit einer Entlüftung verbunden ist. Die Redundanzdruckkammer wird vorzugsweise durch die Redundanzdrucksteuerfläche begrenzt, sodass ein Druck in der Redundanzdruckkammer auf die Redundanzdrucksteuerfläche wirkt. Über das elektropneumatische Redundanzventil kann der Redundanzdruck ausgesperrt werden, das heißt, die Redundanzdruckkammer dauerhaft mit der Umgebung verbunden werden, sodass das Redundanzmodul in diesem Fall dann ausschließlich den Parkbremsdruck an den Federspeicherbremsdruck weiterleiten kann. Der Parkbremsdruck ist in der Regel ein Volumendruck, der direkt von einer elektropneumatischen Parkbremseinheit bereitgestellt wird.

Das Redundanzventil ist vorzugsweise in einen ersten stromlosen Zustand vorgespannt, in welchem der erste Redundanzventilanschluss mit dem zweiten Redundanzventilanschluss verbunden ist, und durch ein Redundanzsignal in einen zweiten Zustand verbringbar, in welchem der zweite Redundanzventilanschluss mit dem dritten Redundanzventilanschluss verbunden ist. Das heißt, im bestromten Zustand ist die Redundanzdruckkammer vorzugsweise mit der Umgebung verbunden, während im stromlosen Zustand der Redundanzdruck durch das Redundanzventil durchgesteuert werden kann. Dies trägt dem Umstand Rechnung, dass in einem Fehlerfall in der Regel ein Ventil stromlos geschaltet wird.

Vorzugsweise wird das Redundanzsignal von einem Parkbremsmodul, einem Zentralmodul oder einer Betriebsbremse bereitgestellt. Ist beispielsweise vorgesehen, dass in einer ersten Rückfallebene ein Parkbremsmodul eine redundante elektrische Aussteuerung übernimmt, kann das Redundanzsignal von dem elektropneumatischen Parkbremsmodul bereitgestellt werden, um anzuzeigen, dass dieses noch funktionsfähig ist. Erst wenn dieses nicht mehr funktionsfähig ist, kann in einer zweiten Rückfallebene dann eine pneumatische Umsetzung der Redundanz erfolgen. Das Zentralmodul kann ebenso dazu dienen, das Redundanzsignal bereitzustellen. Fällt das Zentralmodul aus, wird in diesem Fall dann direkt eine rein pneumatische redundante Umsetzung eines Bremswunschs des Fahrers erreicht. Schließlich kann auch die Betriebsbremse selbst dazu benutzt werden, das Redundanzsignal bereitzustellen. Das heißt, solange die Betriebsbremse funktionsfähig ist, wird das Redundanzsignal bereitgestellt. Für den Fall, dass die Betriebsbremse ausfällt, wird kein Redundanzsignal mehr bereitgestellt, das Redundanzventil schaltet und eine pneumatische Aussteuerung über die Federspeicherbremsen kann realisiert werden.

Weiterhin ist vorzugsweise vorgesehen, dass das Redundanzventil und die Kolbenanordnung in einem Modul integriert sind. Hierdurch kann Bauraum reduziert und das Modul insgesamt leichter verbaut werden. Es kann aber auch Ausführungsformen geben, bei denen das Redundanzventil beabstandet von der Kolbenanordnung ist, insbesondere beispielsweise in ein Parkbremsmodul integriert oder direkt in einen Bremswertgeber. Auch ist denkbar, das Redundanzventil in eine Betriebsbremse zu integrieren oder das Redundanzmodul insgesamt mit einer Betriebsbremse zu integrieren.

In einem zweiten Aspekt wird die eingangs genannte Aufgabe durch ein pneumatisches Bremssystem für ein Fahrzeug, insbesondere ein Nutzfahrzeug, mit einem Parkbremskreis und einem Redundanzmodul nach einer der vorstehend beschriebenen bevorzugten Ausführungsformen eines Redundanzmoduls gemäß dem ersten Aspekt der Erfindung in dem Parkbremskreis gelöst. Es soll verstanden werden, dass das Redundanzmodul gemäß dem ersten Aspekt der Erfindung und das pneumatische Bremssystem gemäß dem zweiten Aspekt der Erfindung gleiche und ähnliche Unteraspekte aufweisen, wie sie insbesondere in den abhängigen Ansprüchen niedergelegt sind. Insofern wird für besondere Ausführungsformen und deren Vorteile vollständig auf die obige Beschreibung Bezug genommen.

In einer ersten bevorzugten Ausführungsform des pneumatischen Bremssystems weist dieses ein elektropneumatisches Parkbremsmodul mit einem Parkbremsanschluss zum Bereitstellen des Parkbremsdrucks auf, der mit dem Parkbremsanschluss des Redundanzmoduls verbunden ist, sowie wenigstens eine Federspeicherbremse, die mit dem Federspeicheranschluss des Redundanzmoduls verbunden ist. Das Redundanzmodul ist demnach zwischen das elektropneumatische Parkbremsmodul und die Federspeicherbremse geschaltet und leitet im Normalbetrieb den Parkbremsdruck als Federspeicherbremsdruck an die Federspeicherbremsen weiter. An den Federspeicheranschluss des Redundanzmoduls können auch zwei oder mehr Federspeicherbremsen angeschlossen werden, insbesondere alle Federspeicherbremsen einer Achse, wie insbesondere einer Hinterachse oder einer Zusatzachse.

Ferner ist bevorzugt, dass das pneumatische Bremssystem einen Bremswertgeber aufweist, der einen pneumatischen Bremswertgeberanschluss aufweist, der mit dem Redundanzdruckanschluss zum Bereitstellen des Redundanzdrucks verbunden ist. Vorzugsweise weist der Bremswertgeber nur einen einzigen pneumatischen Bremswertgeberanschluss auf. Der Bremswertgeber kann darüber hinaus einen oder mehrere, vorzugsweise aber nur einen elektrischen Bremswertgeberanschluss aufweisen, über den der Bremswertgeber ein elektrisches Bremssignal beispielsweise an ein Zentralmodul weitergeben kann.

Gemäß einem dritten Aspekt der Erfindung wird die eingangs genannte Aufgabe durch ein Fahrzeug, insbesondere ein Nutzfahrzeug, mit einem pneumatischen Bremssystem nach einer der vorstehend beschriebenen bevorzugten Ausführungsformen eines pneumatischen Bremssystems gemäß dem zweiten Aspekt der Erfindung gelöst. Wiederum soll verstanden werden, dass das Fahrzeug gemäß dem dritten Aspekt der Erfindung und das pneumatische Bremssystem gemäß dem zweiten Aspekt der Erfindung gleiche und ähnliche Unteraspekte aufweisen, wie sie insbesondere in den abhängigen Ansprüchen niedergelegt sind. Insofern wird vollumfänglich auf die obige Beschreibung Bezug genommen.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: einen Querschnitt durch ein Redundanzmodul in einer ersten Ausführungsform;
- Fig. 2: eine schematische Darstellung eines Redundanzmoduls gemäß einem zweiten Ausführungsbeispiel;
- Fig. 3: eine schematische Darstellung eines Redundanzmoduls gemäß einem dritten Ausführungsbeispiel;
- Fig. 4: ein Redundanzmodul gemäß einem vierten Ausführungsbeispiel; und
- Fig. 5: ein Layout eines Bremssystems gemäß dem zweiten Aspekt der Erfindung, eingebaut in ein Fahrzeug gemäß dem dritten Aspekt der Erfindung.

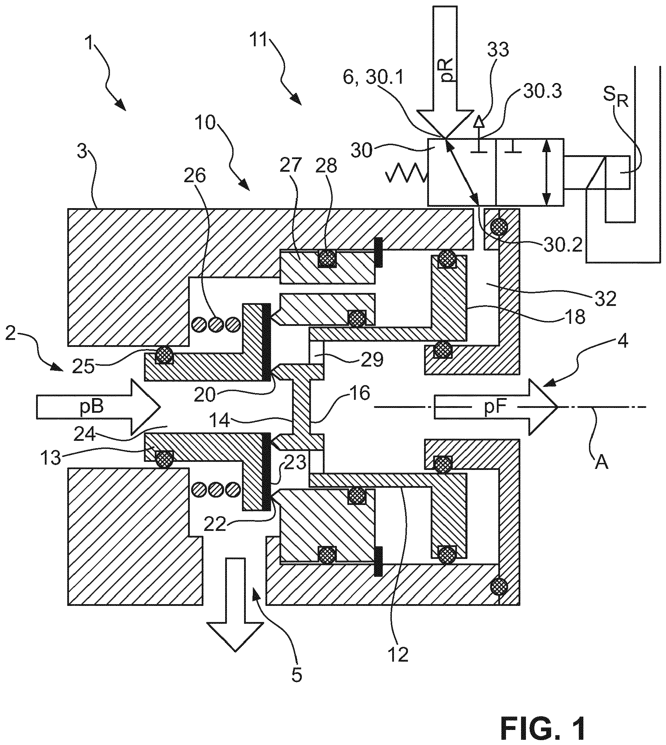

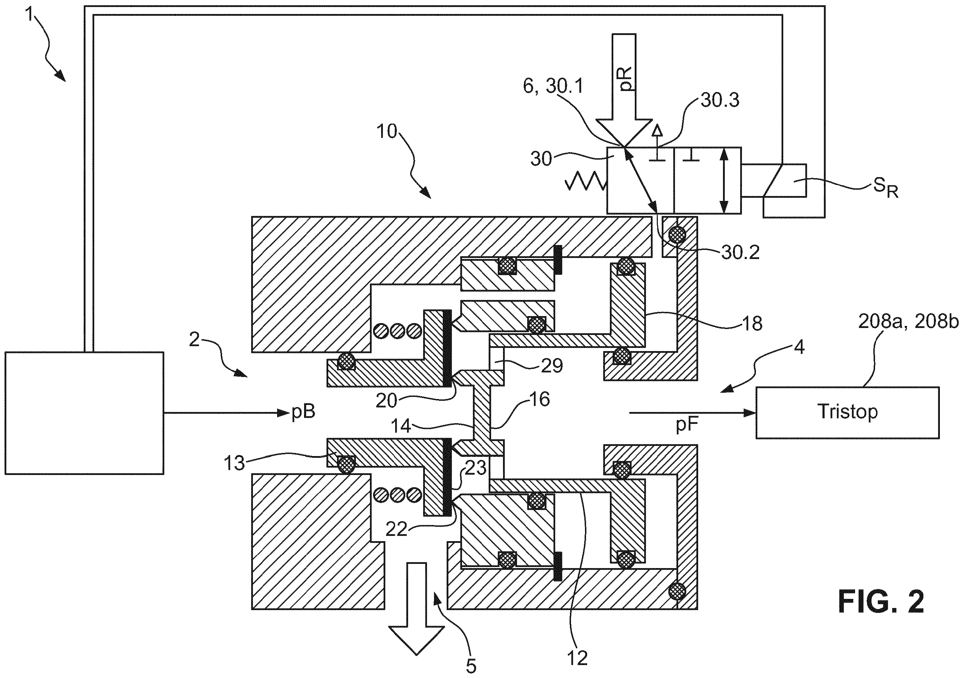

Fig. 1 zeigt zunächst eine abstrakte Darstellung des Redundanzmoduls gemäß dem ersten Aspekt der Erfindung, um einzelne Elemente und deren Funktion genau zu beschreiben, während die Fig. 2 bis 4 insbesondere verschiedene Verschaltungen des Redundanzmoduls 1 zeigen.

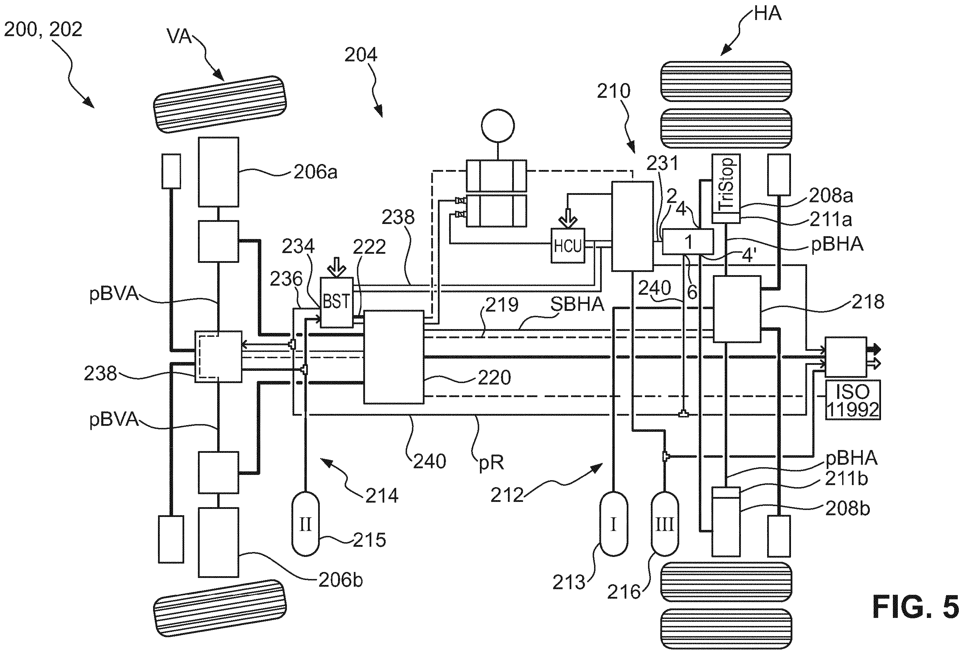

Das Redundanzmodul 1 für ein pneumatisches Bremssystem 204 eines Fahrzeugs 200, nämlich insbesondere eines Nutzfahrzeugs 202, weist eine Parkbremsdruckanschluss 2 auf zum Empfangen eines Parkbremsdrucks pB, der in einem Gehäuse 3 des Redundanzmoduls 1 vorgesehen ist. Das Gehäuse 3 weist darüber hinaus einen Federspeicheranschluss 4 zum Bereitstellen eines Federspeicherdrucks pF sowie einen Entlüftungsanschluss 5 und einen Redundanzdruckanschluss 6 zum Empfangen eines Redundanzdrucks pR auf. Der Entlüftungsanschluss 5 kann mit einem Schalldämpfer oder dergleichen (nicht gezeigt) versehen sein. Der Federspeicheranschluss 4 ist vorzugsweise mit Federspeicherbremsen 208a, 208b (vgl. Fig. 5) verbunden, um diese für den Normalbetrieb zu belüften und so zu lösen.

Im Inneren des Gehäuses 3 ist eine Kolbenanordnung 10 vorgesehen, die einen Inverskolben 12 und einen Entlüftungskolben 13 aufweist. Der Inverskolben 12 hat insgesamt drei Steuerflächen, die dem Parkbremsdruckanschluss 2, dem Federspeicheranschluss 4 und dem Redundanzdruckanschluss 6 zugeordnet sind. Dem Parkbremsdruckanschluss 2 zugeordnet ist eine Parkbremsdrucksteuerfläche 14, dem Federspeicheranschluss 4 zugeordnet ist eine Federspeichersteuerfläche 16 und dem Redundanzdruckanschluss 6 zugeordnet ist eine Redundanzdrucksteuerfläche 18. Der Inverskolben 14 ist entlang der Achse A verschieblich und ist in Fig. 1 in der Abschlussstellung gezeigt. Er liegt an einem Belüftungsventilsitz 20 an, der in diesem Ausführungsbeispiel an dem Entlüftungskolben 13 ausgebildet ist. Der Entlüftungskolben 13 definiert ferner einen Entlüftungsventilsitz 22. Zu diesem Zweck weist der Entlüftungskolben 13 eine Dichtfläche 23 auf, die an einer Stirnseite ausgebildet ist. Der Entlüftungskolben 13 weist ferner einen axialen Kanal 24 auf, durch den Parkbremsdruck pB von dem Parkbremsanschluss 2 zur Parkbremsdrucksteuerfläche 14 gelangen kann. Die Parkbremsdrucksteuerfläche 14 ist durch den Belüftungsventilsitz 20 begrenzt. Der Entlüftungskolben 13 ist ferner mit einem ersten Dichtungsring 25 gegen das Gehäuse 3 abgedichtet und mittels einer Feder 26 in die Abschlussstellung, in der der Entlüftungsanschluss 5 geschlossen ist, vorgespannt. In dieser Situation liegt der Entlüftungskolben 13 an dem Entlüftungsventilsitz 22 an. Dieser ist zwischen der Dichtfläche 23 und einem festsitzenden Kolbenring 27 ausgebildet. Der Kolbenring 27 ist in das Gehäuse 3 eingesetzt und gegen dieses mit einem zweiten Dichtungsring 28 abgedichtet. Der Kolbenring 27 ist ortsfest und nicht verschieblich. Es soll verstanden werden, dass dieser auch mit dem Gehäuse 3 einstückig ausgebildet sein kann. Der Kolbenring 27 dient als Anschlag für den Entlüftungskolben 13, der mittels der Feder 26 gegen den Kolbenring 27 gedrückt wird. Der Inverskolben 12 ist in Fig. 1 in der Abschlussstellung gezeigt, sodass der Belüftungsventilsitz 20 geschlossen ist.

Der Parkbremsdrucksteuerfläche 14 gegenüberliegend ist die Federspeichersteuerfläche 16 angeordnet. Sobald also der am Parkbremsdruckanschluss anliegende Parkbremsdruck pB, der auf die Parkbremsdrucksteuerfläche 14 wirkt, die Kraft übersteigt, die durch den am Federspeicheranschluss 4 anliegenden Federspeicherbremsdruck pF, der auf die Federspeichersteuerfläche 16 wirkt und eine entsprechende Gegenkraft hervorruft, übersteigt, bewegt sich der Inverskolben 12 mit Bezug auf Fig. 1 nach rechts entlang der Achse A, sodass der Belüftungsventilsitz 20 geöffnet wird. Fluid kann dann von dem Parkbremsdruckanschluss 2 über den Belüftungsventilsitz 20 und durch axiale Durchlässe 29 (in Fig. 1 nur einer mit Bezugszeichen versehen) im Inverskolben 12 strömen und zum Federspeicheranschluss 4 gelangen. Auf diese Weise wird der Federspeicherbremsdruck pF gleichsinnig mit dem Parkbremsdruck pB ausgesteuert und vorzugsweise in derselben Höhe. Der Parkbremsdruck pB wird vorzugsweise als Volumendruck bereitgestellt, der einen entsprechenden Volumenstrom bereitstellt, um die Federspeicherbremsen 208a, 208b zu belüften und so zu lösen.

Wenn der Parkbremsdruck pB nun abnimmt, weil die Federspeicherbremsen 208a, 208b eingelegt werden sollen, übersteigt die Kraft, die den Inverskolben 12 mit Bezug auf Fig. 1 nach links belastet, diejenige Kraft, die den Inverskolben 12 mit Bezug auf Fig. 1 nach rechts belastet, sodass sich der Inverskolben 12 mit Bezug auf Fig. 1 nach links bewegt. Er drückt auch den Entlüftungskolben 13 gegen die Kraft der Feder 26 mit Bezug auf Fig. 1 nach links, sodass sich der Entlüftungskolben 13 von dem Entlüftungsventilsitz 22 abhebt und Fluid von dem Federspeicheranschluss 4 durch die axialen Durchlässe 29 über den Entlüftungsventilsitz 22 und aus dem Entlüftungsanschluss 5 hinaus strömen kann. Die Federspeicherbremsen 208a, 208b können entlüftet und so zugespannt werden.

Der Redundanzdruckanschluss 6 ist in diesem Ausführungsbeispiel (Fig. 1) an einem Redundanzventil 30 ausgebildet, welches hier an dem Gehäuse 3 angeordnet ist und einer Redundanzdruckkammer 32 vorgeschaltet ist. Alternativ kann der Redundanzdruckanschluss 6 auch direkt an dem Gehäuse 3 ausgebildet sein und somit unmittelbar Zugang zu der Redundanzdruckkammer 32 gewähren. Das Redundanzventil 30 ist hier als 3/2-Wege-Ventil ausgebildet und weist einen ersten Redundanzventilanschluss 30.1 einen zweiten Redundanzventilanschluss 30.2 und einen dritten Redundanzventilanschluss 30.3 auf. An den ersten Redundanzventilanschluss 30.1 wird der Redundanzdruck pR von einem weiteren Modul ausgesteuert, wie im Folgenden beschrieben werden wird. Der zweite Redundanzventilanschluss 30.2 ist mit der Redundanzdrucckammer 32 verbunden und der dritte Redundanzventilanschluss 30.3 ist mit einer Entlüftung 33 verbunden. Das Redundanzventil 30 ist stromlos in der in Fig. 1 gezeigten ersten Schaltstellung, in der der erste Redundanzventilanschluss 30.1 mit dem zweiten Redundanzventilanschluss 30.2 verbunden ist.

Durch Bereitstellung eines Redundanzsignals SR wird das Redundanzventil 30 bestromt und schaltet in die zweite in Fig. 1 nicht gezeigte Schaltstellung. In der zweiten in Fig. 1 nicht gezeigten Schaltstellung ist der zweite Redundanzventilanschluss 30.2 mit dem dritten Redundanzventilanschluss 30.3 verbunden, sodass die Redundanzdruckkammer 32 entlüftet ist.

Die Redundanzdruckkammer 32 wird einerseits durch das Gehäuse 3, andererseits durch die Redundanzdrucksteuerfläche 18 begrenzt. Wird nun ein Redundanzdruck pR in die Redundanzdruckkammer 32 ausgesteuert, beispielsweise im Falle, dass eine Aussteuerung eines Betriebsbremsdrucks mittels Betriebsbremsen nicht möglich ist, erhöht sich der Druck in der Redundanzdruckkammer 32, sodass bei einem entsprechenden Druckverhältnis der Inverskolben 12 in Bezug auf Fig. 1 nach links bewegt wird. Hierdurch wird wiederum der Entlüftungskolben 13 mit nach links bewegt, sodass der Entlüftungsventilsitz 22 geöffnet wird und Fluid vom Federspeicheranschluss 4 zur Entlüftung 5 strömen kann. In Übereinstimmung hiermit werden die an den Federspeicheranschluss 4 angeschlossenen Federspeicherbremsen 208a, 208b entlüftet und zugespannt. Das heißt, die Aussteuerung eines Redundanzdrucks pR in die Redundanzdruckkammer 32 führt zu einer inversen Aussteuerung von Federspeicherdruck pF und damit zu einer Bremswirkung an der entsprechenden Achse.

Eine erste Variante der Verschaltung des Redundanzmoduls 1 ist schematisch in Fig. 2 dargestellt. Der Parkbremsdruck pB wird hier durch ein elektropneumatisches Parkbremsmodul EPH bereitgestellt, das an den Parkbremsdruckanschluss 2 angeschlossen ist. An den Federspeicheranschluss 4 sind sogenannte Tristop-Bremsaktuatoren angeschlossen, die auch einen Federspeicherbremsenteil 208a, 208b umfassen. Das Redundanzsignal SR wird von dem Parkbremsmodul EPH bereitgestellt. In einer solchen Verschaltung kann beispielsweise das Parkbremsmodul EPH in einer ersten Redundanzebene die redundante Bremsung einer entsprechenden Achse vornehmen, indem Betriebsbremsteile der Tristop-Bremsaktuatoren durch eine entsprechende Ansteuerung der Federspeicherbremsen 208a, 208b ersetzt werden. Sollte in einem weiteren Fehler oder in einem anderen Fehler das Parkbremsmodul EPH ausfallen und stromlos werden, so würde auch das Redundanzsignal SR wegfallen, sodass das Redundanzventil 30 in die in Fig. 2 gezeigte erste Schaltstellung zurückfällt und der Redundanzdruckanschluss 6 freigegeben ist. Durch Aussteuerung von Redundanzdruck pR an dem Redundanzdruckanschluss 6 kann dann eine Bremsung der entsprechenden Achse vorgenommen werden.

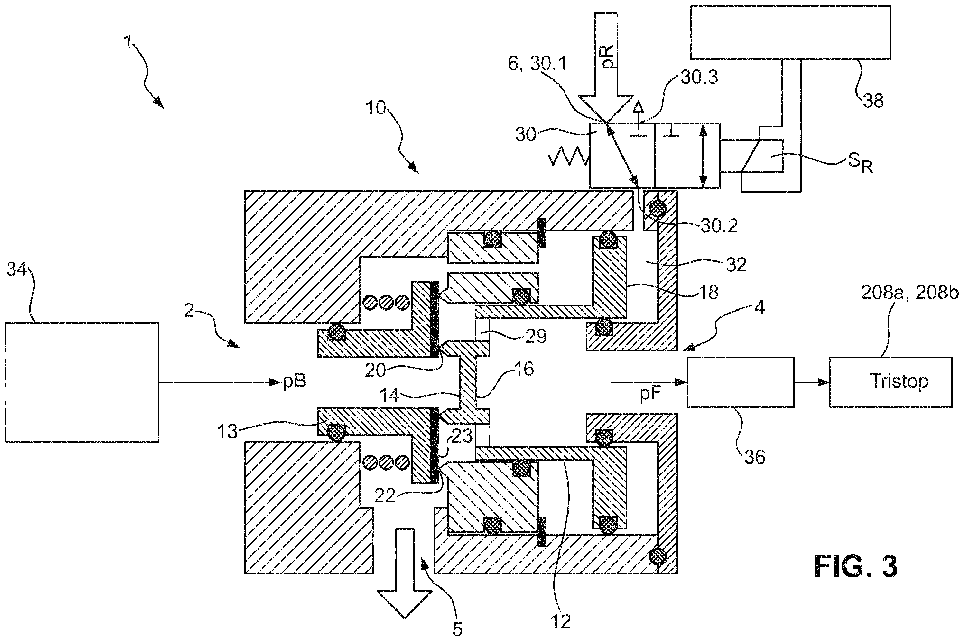

Fig. 3 zeigt eine zweite Variante der Verschaltung, bei der eine pneumatische Parkbremse 34 vorgesehen ist. Die pneumatische Parkbremse 34 stellt in diesem Ausführungsbeispiel (Fig. 3) den Parkbremsdruck pB an dem Parkbremsdruckanschluss 2 bereit. Der Federspeicherdruck pF wird zunächst einem Parkbrems-Relaisventil 36 bereitgestellt, welches dann wiederum den Federspeicherbremsdruck an den entsprechenden Federspeicherbremsen 208a, 208b bereitstellt.

Das Redundanzsignal SR wird in diesem Ausführungsbeispiel von einer Betriebsbremseinheit 38 bereitgestellt, beispielsweise einem Sensor, der an einer Betriebsbremse vorgesehen ist, oder einer der Betriebsbremse vorgeschalteten Einheit. Das Redundanzsignal SR gibt in diesem Fall die Betriebsbereitschaft der Betriebsbremse an. Fällt also die Betriebsbremse aus, fällt auch das von der Betriebsbremseinheit 38 ausgegebene Redundanzsignal SR weg, sodass das Redundanzventil 30 in die in Fig. 3 gezeigte erste Schaltstellung zurückfällt. Die Aussteuerung von Redundanzdruck pR in die Redundanzdruckkammer 32 wird erlaubt, und eine redundante und inverse Aussteuerung des Federspeicherbremsdrucks pF und damit ein Zuspannen der Federspeicherbremsen 208a, 208b wird ermöglicht.

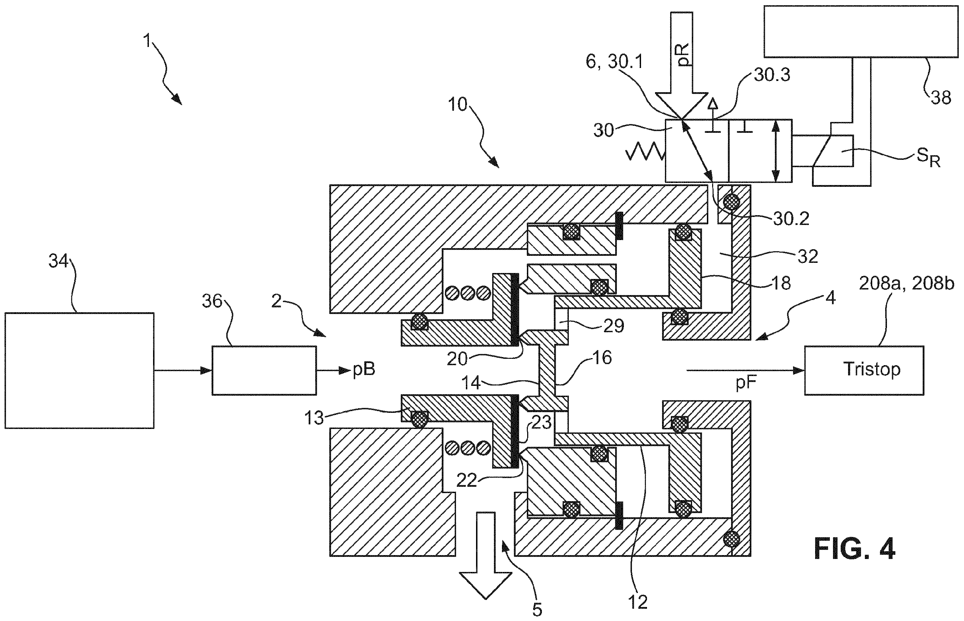

Das in Fig. 4 dargestellte Ausführungsbeispiel entspricht im Wesentlichen dem in Fig. 3 dargestellten, wobei hier das Parkbrems-Relaisventil 36 zwischen die pneumatische Parkbremse 34 und den Parkbremsdruckanschluss 2 geschaltet ist. Der Federspeicheranschluss 4 ist in diesem Ausführungsbeispiel direkt mit den Federspeicherbremsen 208a, 208b der Tristop-Bremsaktuatoren verbunden.

Fig. 5 zeigt nun eine schematische Übersicht über ein pneumatisches Bremssystem 204, das in ein Fahrzeug 200, nämlich ein Nutzfahrzeug 202, eingesetzt ist. Das Fahrzeug 202 weist eine Vorderachse VA sowie eine Hinterachse HA auf. Das pneumatische Bremssystem 204 weist an der Vorderachse VA erste und zweite Betriebsbremsen 206a, 206b und an der Hinterachse HA erste und zweite Federspeicherbremsen 208a, 208b auf, die in sogenannten Tristop-Bremsaktuatoren vorgesehen sind. An der Hinterachse HA sind ferner dritte und vierte Betriebsbremsen 211a, 211b vorgesehen, um einen Betriebsbremswunsch an der Hinterachse HA umzusetzen. Das Bremssystem 204 ist insgesamt dreikreisig aufgebaut und weist einen Hinterachsbetriebsbremskreis 212 auf, der aus einem ersten Druckluftvorrat 213 gespeist wird, einen Vorderachsbetriebsbremskreis 214, der aus einem zweiten Druckluftvorrat 215 gespeist wird, sowie einen Parkbremskreis 210, der aus einem dritten Druckluftvorrat 216 gespeist wird. Der Hinterachsbetriebsbremskreis 212 ist zunächst mit einem Hinterachsmodulator 218 verbunden, der über einen ersten BUS 219 von einem Zentralmodul 220 Hinterachsbremssignale SBHA empfängt und entsprechende Bremsdrücke pBHA an den dritten und vierten Betriebsbremsen 211a, 211b der Hinterachse HA aussteuert. Das Zentralmodul 220 empfängt seinerseits den Betriebsbremswunsch über eine elektrische Bremswertgeberleitung 222 von einem Bremswertgeber BST. Der Bremswertgeber BST weist ferner einen pneumatischen Anschluss 234 auf, der mit einer pneumatischen Bremswertgeberleitung 236 verbunden ist. Der Bremswertgeber BST weist neben der Verbindung mit der elektrischen Bremswertgeberleitung 222 auch eine weitere elektrische Bremswertgeberleitung 238 auf, die mit dem elektropneumatischen Parkbremsmodul EPH verbunden ist. Hierüber kann im Bedarfsfall eine erste Redundanzebene abgebildet werden.

Das Parkbremsmodul EPH ist, wie dies bereits grundsätzlich mit Bezug auf Fig. 2 beschrieben wurde, mit dem Redundanzmodul 1 verbunden. Genauer gesagt ist ein Parkbremsanschluss 231 der EPH mit dem Parkbremsdruckanschluss 2 des Redundanzmoduls 1 verbunden, sodass das Parkbremsmodul EPH den Parkbremsdruck pB an dem Parkbremsdruckanschluss 2 bereitstellen kann. Das Redundanzmodul 1 weist in dem in Fig. 5 gezeigten Ausführungsbeispiel neben dem Federspeicheranschluss 4 einen weiteren Federspeicheranschluss 4' auf, an den jeweils eine der Federspeicherbremsen 208a, 208 angeschlossen ist. Die Funktionsweise ist hier wie bereits mit Bezug auf die Fig. 1 bis 4 beschrieben.

Die pneumatische Bremswertgeberleitung 236 führt im Vorderachsbetriebsbremskreis 214 zu einem Vorderachsmodulator 238. Der Vorderachsmodulator 238 ist rein pneumatisch ausgebildet und steuert einen Vorderachsbremsdruck pBVA an den ersten und zweiten Betriebsbremsen 206a, 206b pneumatisch aus. Von der pneumatischen Bremswertgeberleitung 236 führt ferner eine Redundanzdruckleitung 240 zum Redundanzmodul 1 und ist dort mit dem Redundanzdruckanschluss 6 verbunden. Das heißt, der von dem Bremswertgeber BST pneumatisch ausgesteuerte Druck wird einerseits zur Aussteuerung des Vorderachsbremsdrucks pBVA, der im Betriebsfall ausgesteuert wird, genutzt und andererseits als Redundanzdruck pR, der an dem Redundanzdruckanschluss 6 bereitgestellt wird.

Sollte nun in einem Fehlerfall beispielsweise das Zentralmodul 220, das Parkbremsmodul EPH oder auch der Hinterachsmodulator 218 ausfallen, kann eine redundante Bremsung der Hinterachse HA über die Federspeicherbremsen 208a, 208b dadurch bewirkt werden, dass der vom Bremswertgeber BST ausgesteuerte pneumatische Druck als Redundanzdruck pR an dem Redundanzdruckanschluss 6 bereitgestellt wird, um eine inverse Aussteuerung von Federspeicherbremsdruck pF an den Federspeicherbremsen 208a, 208b zu erreichen, um auf diese Weise die Hinterachse HA redundant zu bremsen.

### Bezugszeichenliste (Bestandteil der Beschreibung)

- 1: Redundanzmodul
- 2: Parkbremsdruckanschluss
- 3: Gehäuse
- 4,4': Federspeicheranschluss
- 5: Entlüftungsanschluss
- 6: Redundanzdruckanschluss
- 10: Kolbenanordnung
- 12: Inverskolben
- 13: Entlüftungskolben
- 14: Parkbremsdrucksteuerfläche
- 16: Federspeichersteuerfläche
- 18: Redundanzdrucksteuerfläche
- 20: Belüftungsventilsitz
- 22: Entlüftungsventilsitz
- 23: Dichtfläche
- 24: Axialer Kanal
- 25: erster Dichtungsring
- 26: Feder
- 27: Kolbenring
- 28: zweiter Dichtungsring
- 29: axiale Durchlässe im Inverskolben
- 30: Redundanzventil
- 30.1: erster Redundanzventilanschluss
- 30.2: zweiter Redundanzventilanschluss
- 30.3: dritter Redundanzventilanschluss
- 32: Redundanzdruckkammer
- 34: Pneumatische Parkbremse
- 36: Park Brake RV
- 38: Betriebsbremseinheit
- 200: Fahrzeug
- 202: Nutzfahrzeug
- 204: Pneumatisches Bremssystem
- 206a, 206b: erste und zweite Betriebsbremsen
- 208a, 208b: erste und zweite Federspeicherbremsen
- 210: Parkbremskreis
- 211a, 211b: dritte und vierte Betriebsbremsen
- 212: Vorderachsbremskreis
- 213: erster Druckluftvorrat
- 214: Hinterachsbremskreis
- 215: zweiter Druckluftvorrat
- 216: dritter Druckluftvorrat
- 218: Hinterachsmodulator
- 219: erster BUS
- 220: Zentralmodul
- 222: Elektrische Bremswertgeberleitung
- 231: Parkbremsanschluss
- 234: Pneumatischer Bremswertgeberanschluss
- 236: Pneumatische Bremswertgeberleitung
- 238: Vorderachsmodulator
- 240: Redundanzdruckleitung
- VA: Vorderachse
- HA: Hinterachse
- BST: Bremswertgeber
- EPH: Elektropneumatisches Parkbremsmodul
- pB: Parkbremsdruck
- pBHA: Hinterachsbremsdruck
- pBVA: Vorderachsbremsdruck
- pF: Federspeicherdruck
- pR: Redundanzdruck
- SR: Redundanzsignal
- SBHA: Hinterachsbremssignal

## Patentansprüche

1. Redundanzmodul (1) für ein pneumatisches Bremssystem (204) eines Fahrzeugs (200), insbesondere Nutzfahrzeug (202), mit Federspeicherbremsen (208a, 208b) an wenigstens einer Achse (VA, HA), aufweisend:
einen Parkbremsdruckanschluss (2) zum Empfangen eines Parkbremsdrucks (pB), einen Federspeicheranschluss (4) zum Bereitstellen eines Federspeicherdrucks (pF) und einen Redundanzdruckanschluss (6) zum Empfangen eines Redundanzdrucks (pR), und
eine Kolbenanordnung (10), mit einem Inverskolben (12),
**dadurch gekennzeichnet, dass**
der Inverskolben (12) eine Parkbremsdrucksteuerfläche (14), eine Federspeichersteuerfläche (16) und eine Redundanzdrucksteuerfläche (18) aufweist,
wobei ein auf die Parkbremsdrucksteuerfläche (14) wirkender Parkbremsdruck (pB) das Aussteuern eines gleichsinnigen Federspeicherdrucks (pF) bewirkt, und ein auf die Redundanzdrucksteuerfläche (18) wirkender Redundanzdruck (pR) ein inverses Aussteuern des Federspeicherdrucks (pF) bewirkt.

2. Redundanzmodul (1) nach Anspruch 1, wobei der Inverskolben (12) an einem Belüftungsventilsitz (20) anliegt, wobei Fluid über den Belüftungsventilsitz (20) strömt, wenn der auf die Parkbremsdrucksteuerfläche (14) wirkende Parkbremsdruck (pB) den auf die Federspeichersteuerfläche (16) wirkenden Federspeicherdruck (pF) übersteigt.

3. Redundanzmodul (1) nach Anspruch 1 oder 2, aufweisend einen Entlüftungskolben (13), der an einem Entlüftungsventilsitz (22) anliegt und einen Entlüftungsanschluss (5) wahlweise absperrt oder freigibt.

4. Redundanzmodul (1) nach Anspruch 3, wobei der Entlüftungskolben (13) gegen den Entlüftungsventilsitz (22) federbelastet vorgespannt ist.

5. Redundanzmodul (1) nach Anspruch 2 und 3, wobei der Belüftungsventilsitz (20) an dem Entlüftungskolben (13) ausgebildet ist.

6. Redundanzmodul (1) nach Anspruch 5, wobei Redundanzdruck (pR) auf die Redundanzsteuerfläche (18) aufbringbar ist, um ein Überströmen von Fluid von dem Federspeicheranschluss (4) über den Entlüftungsventilsitz (22) zu bewirken.

7. Redundanzmodul (1) nach Anspruch 5 oder 6, wobei Redundanzdruck (pR) auf die Redundanzsteuerfläche (18) aufbringbar ist, um den Inverskolben (12) gemeinsam mit dem Entlüftungskolben (13) zu bewegen und den Entlüftungskolben (13) von dem Entlüftungsventilsitz (22) abzuheben.

8. Redundanzmodul (1) nach einem der Ansprüche 5 bis 7, wobei der Entlüftungsventilsitz (22) radial außerhalb des Belüftungsventilsitzes (20) angeordnet ist.

9. Redundanzmodul (1) nach einem der vorstehenden Ansprüche, aufweisend ein elektropneumatisches Redundanzventil (30), mit einem ersten Redundanzventilanschluss (30.1), der den Redundanzdruckanschluss (6) bildet oder mit diesem verbunden ist, einem zweiten Redundanzventilanschluss (30.2), der mit einer Redundanzdruckkammer (32) verbunden ist, und mit einem dritten Redundanzventilanschluss (30.3), der mit einer Entlüftung (33) verbunden ist.

10. Redundanzmodul (1) nach Anspruch 9, wobei das Redundanzventil (30) in einen ersten stromlosen Zustand vorgespannt ist, in welchem der erste Redundanzventilanschluss (30.1) mit dem zweiten Redundanzventilanschluss (30.2) verbunden ist, und durch ein Redundanzsignal (SR) in einen zweiten Zustand verbringbar ist, in welchem der zweite Redundanzventilanschluss (30.2) mit dem dritten Redundanzventilanschluss (30.3) verbunden ist.

11. Redundanzmodul (1) nach Anspruch 10, wobei das Redundanzsignal (SR) von einem Parkbremsmodul (EPH), einem Zentralmodul (220) oder einer Betriebsbremse (211a, 211b) bereitgestellt wird.

12. Redundanzmodul (1) nach Anspruch 10 oder 11, wobei das Redundanzventil (30) und die Kolbenanordnung (10) in ein Modul (11) integriert sind.

13. Pneumatisches Bremssystem (204) für ein Fahrzeug (200), insbesondere Nutzfahrzeug (204), mit einem Parkbremskreis (210) und einem Redundanzmodul (1) nach einem der Ansprüche 1 bis 12 in dem Parkbremskreis (210).

14. Pneumatisches Bremssystem (204) nach Anspruch 13, aufweisend
ein elektropneumatisches Parkbremsmodul (EPH) mit einem Parkbremsanschluss (231) zum Bereitstellen des Parkbremsdrucks (pB), der mit dem Parkbremsanschluss (2) verbunden ist, und
wenigstens eine Federspeicherbremse (208a), die mit dem Federspeicheranschluss (4) verbunden ist.

15. Pneumatisches Bremssystem (204) nach Anspruch 13 oder 14, aufweisend einen Bremswertgeber (BST) mit einem pneumatischen Bremswertgeberanschluss (234), der mit dem Redundanzdruckanschluss (6) zum Bereitstellen des Redundanzdrucks (pR) verbunden ist.

16. Fahrzeug (200), insbesondere Nutzfahrzeug (202), mit einem pneumatischen Bremssystem (204) nach einem der Ansprüche 13 bis 15.

## Claims

1. A redundancy module (1) for a pneumatic braking system (204) of a vehicle (200), in particular a utility vehicle (202), having spring-loaded brakes (208a, 208b) on at least one axle (VA, HA), comprising:
a parking brake pressure port (2) for receiving a parking brake pressure (pB), a spring-loaded port (4) for providing a spring-loaded pressure (pF) and a redundancy pressure port (6) for receiving a redundancy pressure (pR), and
a piston assembly (10), having a reverse piston (12),
**characterized in that**
the reverse piston (12) comprises a parking brake pressure control surface (18), a spring-loaded control surface (16) and a redundancy pressure control surface (18),
wherein a parking brake pressure (pB) acting on the parking brake control surface (18) causes the control of a spring-loaded pressure (pF) in the same direction, and a redundancy pressure (pR) acting on the redundancy pressure control surface (18) causes an inverse control of the spring-loaded pressure (pF).

2. The redundancy module (1) according to claim 1, wherein the reverse piston (12) abuts on an air input valve seat (20), wherein fluid flows over the air input valve seat (20) when the parking brake pressure (pB) acting on the parking brake pressure control surface (14) exceeds the spring-loaded pressure (pF) acting on the spring-loaded control surface (16).

3. The redundancy module (1) according to claim 1 or 2, comprising a venting piston (13), which abuts on an air output valve seat (22) and selectively blocks or releases a venting port (5).

4. The redundancy module (1) according to claim 3, wherein the venting piston (13) is prestressed against the air output valve seat (22).

5. The redundancy module (1) according to claim 2 and 3, wherein the air input valve seat (20) is formed on the venting piston (13).

6. The redundancy module (1) according to claim 5, wherein redundancy pressure (pR) can be applied to the redundancy control surface (18), in order to cause an overflow of fluid from the spring-loaded port (4) over the air output valve seat (22) .

7. The redundancy module (1) according to claim 5 or 6, wherein redundancy pressure (pR) can be applied to the redundancy control surface (18), in order to move the reverse piston (12) jointly with the venting piston (13) and to lift the venting piston (13) from the air output valve seat (22).

8. The redundancy module (1) according to any of claims 5 to 7, wherein the air output valve seat (22) is arranged radially outside of the air input valve seat (20).

9. The redundancy module (1) according to any of the foregoing claims, comprising an electropneumatic redundancy valve (30), having a first redundancy valve port (30.1), which forms the redundancy pressure port (6) or is connected thereto, a second redundancy valve port (30.2), which is connected to a redundancy pressure chamber (32), and having a third redundancy valve port (30.3), which is connected to the vent (33).

10. The redundancy module (1) according to claim 9, wherein the redundancy valve (30) is prestressed in a first currentless state, in which the first redundancy valve port (30.1) is connected to the second redundancy valve port (30.2), and can be brought to a second state by a redundancy signal (SR), in which the second redundancy valve port (30.2) is connected to the third redundancy valve port (30.3).

11. The redundancy module (1) according to claim 10, wherein the redundancy signal (SR) is provided by a parking brake module (EPH), a central module (220) or a service brake (211a, 211b).

12. The redundancy module (1) according to claim 10 or 11, wherein the redundancy valve (30) and the piston assembly (10) are integrated in one module (11).

13. A pneumatic braking system (204) for a vehicle (200), in particular a utility vehicle (204), having a parking brake circuit (210) and a redundancy module (1) according to any of claims 1 to 12 in the parking brake circuit (210).

14. The pneumatic braking system (204) according to claim 13, comprising
an electropneumatic parking brake module (EPH) having a parking brake port (231) for providing the parking brake pressure (pB), which is connected to the parking brake port (2), and
at least one spring-loaded brake (208a), which is connected to the spring-loaded port (4).

15. The pneumatic braking system (204) according to claim 13 or 14, comprising a brake value transmitter (BST) having a pneumatic brake value transmitter port (234), which is connected to the redundancy pressure port (6) for providing the redundancy pressure (pR).

16. A vehicle (200), in particular a utility vehicle (202), having a pneumatic braking system (204) according to any of claims 13 to 15.

## Revendications

1. Module redondant (1) pour un système de freinage pneumatique (204) d'un véhicule (200), en particulier véhicule utilitaire (202), avec des freins à ressort (208a, 208b) sur au moins un essieu (VA, HA), présentant :
un raccord de pression de frein de stationnement (2) pour la réception d'une pression de frein de stationnement (pB), un raccord d'accumulateur à ressort (4) pour la fourniture d'une pression d'accumulateur à ressort (pF) et un raccord de pression redondante (6) pour la réception d'une pression redondante (pR), et
un ensemble de piston (10), avec un piston inverse (12),
**caractérisé en ce que**
le piston inverse (12) présente une surface de commande de pression de frein de stationnement (14), une surface de commande d'accumulateur à ressort (16) et une surface de commande de pression redondante (18),
dans lequel une pression de frein de stationnement (pB) agissant sur la surface de commande de pression de frein de stationnement (14) provoque la modulation d'une pression d'accumulateur à ressort (pF) de même sens, et une pression redondante (pR) agissant sur la surface de commande de pression redondante (18) provoque une modulation inverse de la pression d'accumulateur à ressort (pF).

2. Module redondant (1) selon la revendication 1, dans lequel le piston inverse (12) s'applique contre un siège de soupape d'aération (20), dans lequel du fluide s'écoule au-dessus du siège de soupape d'aération (20) lorsque la pression de frein de stationnement (pB) agissant sur la surface de commande de pression de frein de stationnement (14) dépasse la pression d'accumulateur à ressort (pF) agissant sur la surface de commande d'accumulateur à ressort (16).

3. Module redondant (1) selon la revendication 1 ou 2, présentant un piston de ventilation (13), qui s'applique contre un siège de soupape de ventilation (22) et sélectivement obture ou libère un raccord de ventilation (5).

4. Module redondant (1) selon la revendication 3, dans lequel le piston de ventilation (13) est précontraint de manière sollicitée par un ressort contre le siège de soupape de ventilation (22).

5. Module redondant (1) selon la revendication 2 ou 3, dans lequel le siège de soupape d'aération (20) est réalisé sur le piston de ventilation (13).

6. Module redondant (1) selon la revendication 5, dans lequel la pression redondante (pR) peut être appliquée sur la surface de commande redondante (18), afin de provoquer un débordement de fluide à partir du raccord d'accumulateur à ressort (4) au-dessus du siège de soupape de ventilation (22).

7. Module redondant (1) selon la revendication 5 ou 6, dans lequel la pression redondante (pR) peut être appliquée sur la surface de commande redondante (18), afin de déplacer le piston inverse (12) conjointement avec le piston de ventilation (13) et de soulever le piston de ventilation (13) du siège de soupape de ventilation (22).

8. Module redondant (1) selon l'une quelconque des revendications 5 à 7, dans lequel le siège de soupape de ventilation (22) est disposé radialement à l'extérieur du siège de soupape d'aération (20).

9. Module redondant (1) selon l'une quelconque des revendications précédentes, présentant une soupape redondante électropneumatique (30), avec un premier raccord de soupape redondante (30.1), qui forme le raccord de pression redondante (6) ou est relié à celui-ci, un deuxième raccord de soupape redondante (30.2), qui est relié à une chambre de pression redondante (32), et avec un troisième raccord de soupape redondante (30.3), qui est relié à une ventilation (33).

10. Module redondant (1) selon la revendication 9, dans lequel la soupape redondante (30) est précontrainte dans un premier état sans courant, dans lequel le premier raccord de soupape redondante (30.1) est relié au deuxième raccord de soupape redondante (30.2), et peut être amené par un signal redondant (SR) dans un deuxième état, dans lequel le deuxième raccord de soupape redondante (30.2) est relié au troisième raccord de soupape redondante (30.3).

11. Module redondant (1) selon la revendication 10, dans lequel le signal redondant (SR) est fourni par un module de frein de stationnement (EPH), un module central (220) ou un frein de service (211a, 211b).

12. Module redondant (1) selon la revendication 10 ou 11, dans lequel la soupape redondante (30) et l'ensemble de piston (10) sont intégrés dans un module (11).

13. Système de freinage pneumatique (204) pour un véhicule (200), en particulier véhicule utilitaire (204), avec un circuit de frein de stationnement (210) et un module redondant (1) selon l'une quelconque des revendications 1 à 12 dans le circuit de frein de stationnement (210).

14. Système de freinage pneumatique (204) selon la revendication 13, présentant
un module de frein de stationnement (EPH) électropneumatique avec un raccord de frein de stationnement (231) pour la fourniture de la pression de frein de stationnement (pB), qui est relié au raccord de frein de stationnement (2), et
au moins un frein à ressort (208a), qui est relié au raccord d'accumulateur à ressort (4).

15. Système de freinage pneumatique (204) selon la revendication 13 ou 14, présentant un transmetteur de valeur de freinage (BST) avec un raccord de transmetteur de valeur de freinage (234) pneumatique, qui est relié au raccord de pression redondante (6) pour la fourniture de la pression redondante (pR) .

16. Véhicule (200), en particulier véhicule utilitaire (202), avec un système de freinage pneumatique (204) selon l'une quelconque des revendications 13 à 15.
